# FASCICULE DE BREVET EUROPEEN

(11) **EP 3 208 526 B1**
(45) Date de publication et mention de la délivrance du brevet: **13.04.2022**
(21) Numéro de dépôt: 17154926.4
(22) Date de dépôt: 07.02.2017
(51) Int. Cl.: F21S 41/50, F21S 45/10

(54) **ENSEMBLE LUMINEUX POUR L'ÉCLAIRAGE ET/OU LA SIGNALISATION D'UN VÉHICULE AUTOMOBILE**
LICHTANLAGE ZUR BELEUCHTUNG UND/ODER SIGNALISIERUNG FÜR KRAFTFAHRZEUG
LIGHTING ASSEMBLY FOR LIGHTING AND/OR SIGNALLING OF A MOTOR VEHICLE

(30) Priorité: 18.02.2016 FR 1651305
(43) Date de publication de la demande: 23.08.2017
(73) Titulaire: Valeo Vision, 93012 Bobigny Cedex (FR)
(72) Inventeur: BRASSIER, Marc, 94170 LE PERREUX SUR MARNE (FR); PUENTE, Jean-Claude, 93190 LIVRY GARGAN (FR)
(74) Mandataire: Valeo Visibility

(56) Documents cités:
- DE-U1-202012 005 548
- FR-A1- 3 022 330
- JP-A- 2009 199 778
- JP-A- 2014 149 980

## Description

La présente invention se rapporte aux ensembles lumineux pour l'éclairage et/ou la signalisation de véhicules automobiles.

Des ensembles lumineux pour l'éclairage et/ou la signalisation d'un véhicule automobile peuvent comprendre un module lumineux, logeant un ensemble optique de génération et de focalisation d'un ou plusieurs faisceaux lumineux, ainsi qu'un masque qui entoure le module lumineux.

De manière connue, l'ensemble optique comporte une ou plusieurs sources émettrices de lumière (lampes à incandescence ou à décharge gazeuse, ou diodes électroluminescentes) et des moyens optiques destinés à former, focaliser et guider un ou plusieurs faisceaux lumineux selon le nombre de sources émettrices mises en œuvre. Ces moyens optiques comportent généralement des moyens de déviation optique des rayons émis par les sources en direction de moyens de focalisation disposés en sortie de l'ensemble optique, par exemple une ou plusieurs lentilles.

Le masque est généralement une pièce de géométrie complexe dont une partie s'étend sous lesdits moyens de focalisation. Il a pour fonction principale la protection ou la dissimulation de certains éléments tels que, à titre d'exemples non exhaustifs, des éléments de fixation des sources émettrices de lumière ou des capteurs intégrés au module lumineux d'éclairage et/ou de signalisation. Le masque a également une fonction esthétique, participant à l'aspect général des optiques vu de l'extérieur du véhicule. A ce titre, sa réalisation et sa tenue dans le temps doivent être compatibles avec les contraintes esthétiques dudit véhicule. Notamment, selon le niveau de gamme du véhicule, les masques peuvent présenter un aspect noir ou métallisé, et il est attendu qu'ils conservent dans le temps cet aspect, sans déformation.

Il peut arriver, dans des conditions d'ensoleillement et une position du véhicule particulières, que des rayons émis par le soleil soient déviés par la lentille et soient focalisés, au sein de l'ensemble optique, sur la partie du masque qui s'étend sous les moyens de focalisation précités.

Ce phénomène, connu sous le terme de « Sunburn », génère des échauffements locaux très élevés, échauffements locaux qui conduisent à des dégradations parfois sévères du masque ou d'éléments situés à son voisinage.

Ce phénomène est d'autant plus marqué et peut prendre une ampleur d'autant plus grande que le masque est réalisé dans des matériaux de couleur noire ou sombre, qui absorbent la chaleur de sorte qu'une focalisation des rayons en un point précis peut entraîner une surchauffe et des déformations irréversibles du masque.

Le document FR2896852 propose la mise en place d'un ensemble de moyens de détection de la focalisation de rayons émis par le soleil, par exemple un ou plusieurs capteurs thermiques, optiques ou électriques. Selon la solution proposée par le document FR2896852, les signaux fournis par ces moyens de détection actionnent des moyens de protection tels que des caches amovibles. Une telle solution nécessite toutefois la mise en place de moyens électroniques de commande et d'asservissement relativement complexes et coûteux. Elle augmente également l'encombrement de l'ensemble d'éclairage et/ou de signalisation. JP 2009 199778 A divulgue un ensemble lumineux connu de l'art antérieur.

L'invention a pour but de proposer une solution simple et peu coûteuse pour pallier les inconvénients résultant de la réflexion et de la focalisation, par des moyens de focalisation d'un module lumineux pour l'éclairage et/ou la signalisation d'un véhicule automobile, sur la portion de masque disposé sous le module, de rayons émis par le soleil.

Dans ce but, l'invention propose un ensemble lumineux pour l'éclairage et/ou la signalisation d'un véhicule automobile, qui comporte un module lumineux logeant des moyens d'émission et des moyens de focalisation d'un ou plusieurs faisceaux lumineux, et qui comporte également un masque dont une portion s'étend au-dessous desdits moyens de focalisation. Selon l'invention, ladite portion du masque comporte une partie transparente à la lumière, de telle manière que des rayons lumineux issus du soleil et réfléchis et focalisés par lesdits moyens de focalisation sur ladite portion de masque traversent ladite partie transparente.

Selon l'invention :
- ledit masque est réalisé dans un matériau de base, transparent ou translucide.
- ledit matériau de base est combiné à un additif permettant de rendre plus sombre ledit masque que dans sa composition d'origine sans additif, l'additif consistant au moins en une fine épaisseur d'un revêtement disposé sur une première face du masque, opposée à une deuxième face dudit masque exposée auxdits rayons lumineux, ladite partie transparente étant formée par le matériau de base du masque et une ouverture formée dans ledit revêtement ;
   ou
- ledit masque est obtenu par injection de deux matériaux polymères de propriétés thermiques différentes, dont l'un forme ladite partie transparente auxdits rayons issus du soleil et réfléchis et focalisés sur ledit masque par lesdits moyens de focalisation, et dont l'autre constitue le reste dudit masque.

Avantageusement, ladite partie transparente est de faible taille, de telle manière qu'elle n'est pas visible, à l'œil nu, par un observateur situé face à l'ensemble d'éclairage et/ou de signalisation.

On comprend que selon l'invention, on cherche à rendre transparente une partie du masque uniquement sur la zone d'impact des rayons issus du soleil qui viennent taper le masque après réflexion et focalisation par la lentille. Ce phénomène ne se produit que sous des conditions particulières, de sorte qu'il est possible de déterminer la zone d'impact de ces rayons pour chaque modèle d'ensemble lumineux. Il est dès lors possible de proposer une partie transparente de faible taille qui soit efficace pour la transmission de rayons et peu pénalisants pour l'esthétisme de l'ensemble. Notamment, on peut prévoir avantageusement que la partie transparente présente une inclinaison par rapport à la normale au plan du masque, de manière à être orientée en direction desdits moyens de focalisation.

Selon différentes caractéristiques de l'invention, prises seules ou en combinaison :
- la portion de masque comporte une première face opposée à une deuxième face exposée auxdits rayons lumineux, ladite partie étant transparente de la première face jusqu'à la deuxième face ;
- le matériau de base peut être un polymère à forte propriété de transparence, notamment de la famille des polycarbonates ou de la famille des polyéthersulfones ;
- l'additif peut être compris dans l'épaisseur du masque, l'additif étant injecté dans ledit matériau de base : la partie transparente auxdits rayons peut dans ce cas résulter d'une ouverture ménagée dans ledit masque ;
- le revêtement est ajouré par une ablation au laser pour former cette ouverture ;
   - la partie transparente présente une forme d'arc de cercle, suivant la courbure d'une lentille formant lesdits moyens de focalisation.

D'autres caractéristiques et avantages de l'invention ressortiront de la description qui suit d'un de ses modes de réalisation préférés, ainsi que des figures suivantes :
- la figure 1, qui est une vue schématique de côté d'un ensemble lumineux pour l'éclairage et/ou la signalisation d'un véhicule, exposant le problème technique de « Sunburn » que se propose de résoudre l'art antérieur ;
- la figure 2, qui est une vue de côté d'un ensemble lumineux pour l'éclairage et/ou la signalisation selon un premier mode de réalisation de l'invention ;
- la figure 3, qui est une vue de côté d'un ensemble lumineux pour l'éclairage et/ou la signalisation selon un deuxième mode de réalisation de l'invention ;
- et la figure 4 qui présente une vue de dessus d'un ensemble lumineux selon l'invention.

Pour simplifier la représentation et la lecture, on considèrera l'invention dans son application à un ensemble lumineux pour l'éclairage et/ou la signalisation dans lequel un module comporte une unique source émettrice de lumière, ce qui suit s'appliquant de la même manière quel que soit le nombre de sources émettrices de lumière considéré. De même, on considèrera dans ce qui suit l'invention dans son application à un ensemble lumineux pour l'éclairage et/ou la signalisation situé à l'avant d'un véhicule automobile, position dans laquelle la probabilité d'être exposé au problème auquel l'invention a pour but de répondre est la plus forte, mais on comprendra que l'invention peut s'appliquer de la même manière à tout ensemble lumineux d'éclairage et/ou de signalisation dudit véhicule, quelle que soit sa position sur ce dernier.

Ainsi qu'évoqué en préambule du présent document, un ensemble lumineux pour l'éclairage et/ou la signalisation d'un véhicule automobile comprend, de manière non exhaustive, un module lumineux 1 qui inclut, en particulier, une source émettrice de lumière (non représentée), des moyens de déviation optique des rayons émis par la source de lumière (non représentés) destinés à assurer une répartition correcte de l'énergie lumineuse en direction de moyens de focalisation disposés en sortie du module pour la création d'un faisceau lumineux. Selon le mode de réalisation préféré représenté, lesdits moyens de focalisation consistent en une lentille 2, mais l'invention s'applique quel que soit le moyen de focalisation retenu.

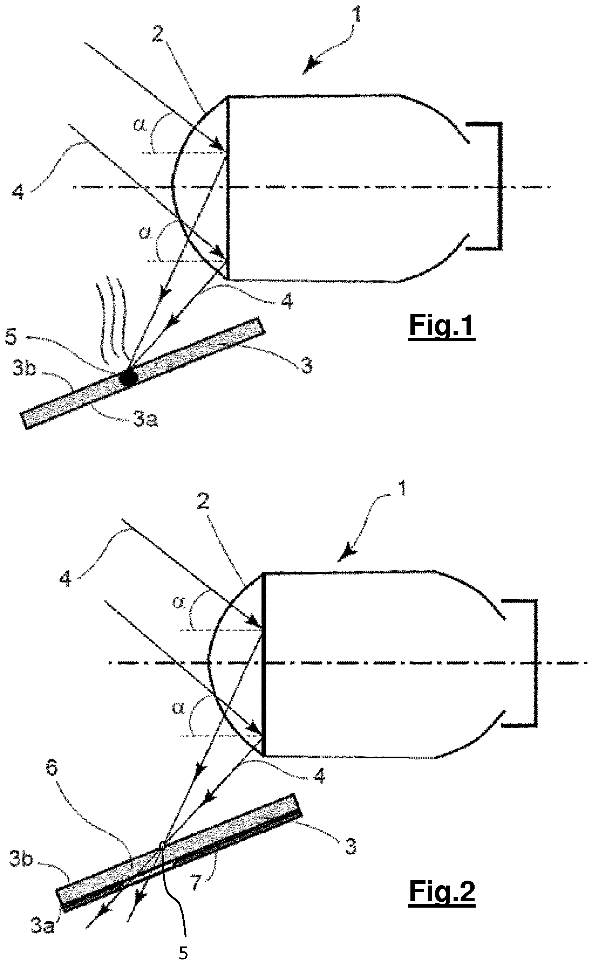

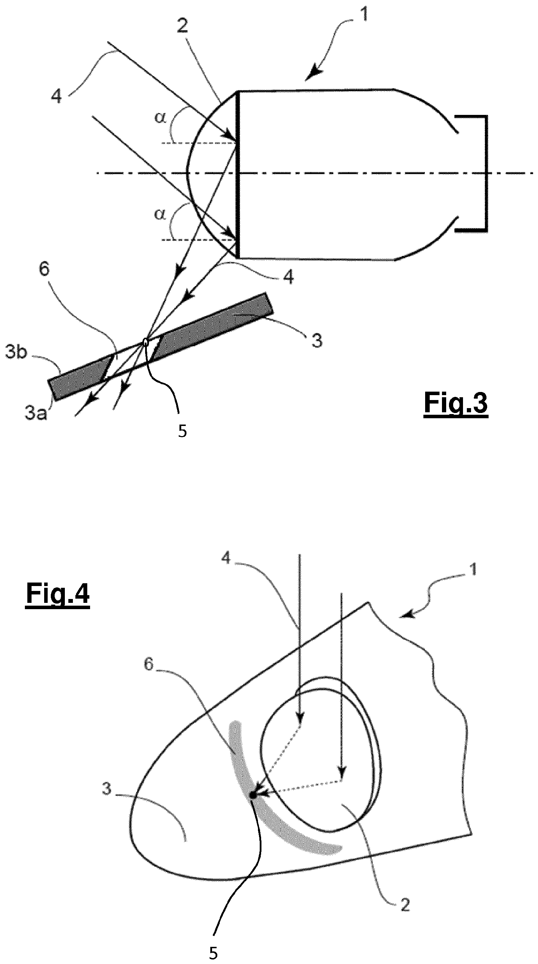

L'ensemble lumineux d'éclairage et/ou de signalisation comporte également un masque 3, qui confère à l'ensemble d'éclairage et/ou de signalisation une partie de son esthétique telle que perçue par un observateur à l'extérieur du véhicule, notamment en cachant certains éléments dudit module vis-à-vis de l'extérieur (à titre d'exemples non limitatifs, des éléments de fixation de composants du module lumineux). De forme complexe, réalisé le plus souvent par injection d'un matériau plastique dans un moule approprié, le masque 3 comporte au moins une portion qui s'étend sous les moyens de focalisation 2, tel qu'illustré par exemple sur les figures 2 et 3.

Dans certaines situations de conduite, illustrée à titre d'exemple sur la figure 1 et combinant notamment une position du véhicule face au soleil et dans une pente déterminée, et une position du soleil suffisamment haut dans le soleil, des rayons lumineux 4 issus du soleil parviennent à la lentille de focalisation 2 sous un angle α tel que, réfléchis par ladite lentille 2, lesdits rayons lumineux 4 sont focalisés par cette dernière et concentrés en une zone de faibles dimensions de la portion du masque 3 située sous la lentille 2. En cette zone de concentration des rayons du soleil 5, le masque 3 subit alors une élévation forte de température, qui conduit à un vieillissement accéléré et, dans certains cas, à des détériorations irréversibles dudit masque. Ce phénomène est d'autant plus important lorsqu'au moins cette portion du masque 3 a un aspect visuel très sombre, voire noir, puisque le matériau ne réfléchit pas la lumière et absorbe la chaleur.

Comme l'illustrent notamment les figures 2 à 3, l'invention propose de rendre transparente aux rayons lumineux 4 issus du soleil et focalisés par la lentille 2 une partie 6, de faibles dimensions, du masque 3, incluant ladite zone de concentration 5 desdits rayons lumineux. Afin de définir au mieux les modes de réalisation de cette partie 6 transparente, on définit sur ce masque 3 une première face 3a, dite face arrière, opposée à une deuxième face 3b du masque qui est exposée aux rayons lumineux 4 issus du soleil et focalisés par la lentille 2.

La partie transparente 6 s'étend sur toute l'épaisseur du masque 3, de la première face 3a à la deuxième face 3b, de sorte que les rayons lumineux 4 issus du soleil, réfléchis et focalisés par la lentille 2, traversent le masque 3 sans créer d'échauffement local, ou en ne générant qu'un échauffement très réduit.

Avantageusement, la zone de concentration 5 des rayons du soleil sur le masque étant de faible largeur, la partie transparente 6 est également de faible largeur (typiquement de l'ordre de 1 mm de largeur). Il s'ensuit que l'aspect visuel global du masque et de l'ensemble lumineux, pour un observateur placé face au véhicule équipé d'un ensemble lumineux d'éclairage et/ou de signalisation selon l'invention, est inchangé.

Il est à noter, comme l'illustre la figure 4 qui montre schématiquement une vue de dessus d'un ensemble lumineux selon l'invention , avec seules la lentille et une portion de masque visibles, que, si la partie 6 rendue transparente aux rayons 4 issus du soleil, réfléchis et focalisés sur le masque par la lentille formant les moyens de focalisation 2, est de faible largeur, sa longueur est avantageusement égale ou supérieure à la largeur des moyens de focalisation 2. La partie transparente 6 aux rayons issus du soleil présente dans le cas illustré une forme d'arc de cercle, épousant la forme bombée de la lentille formant ici les moyens de focalisation 2. Cette forme d'arc de cercle correspond au déplacement de la zone sensiblement ponctuelle de concentration des rayons du soleil sur le masque en fonction de l'inclinaison du véhicule et de la position du soleil dans le ciel.

On comprend que la partie 6 transparente aux rayons du soleil est avantageusement réalisée tel que représenté sur les figures 2 et 3, avec une inclinaison par rapport à la normale au plan du masque, en direction de la lentille 2. La partie transparente 6 est ainsi orientée sensiblement selon la direction des rayons au point de concentration 5 des rayons sur le masque, de manière à laisser passage plus efficacement à ces rayons, et elle est ainsi orientée vers l'intérieur du véhicule, accentuant encore l'impression pour l'observateur que le masque ne comporte pas de partie transparente aux rayons.

Selon l'invention, on peut réaliser le masque 3 et la partie transparente 6 de différentes manières, que l'on va décrire de façon non exhaustive, par la suite.

Il est possible dans une première variante de réaliser le masque 3 dans un matériau polymère de base à forte propriété de transparence, du type polycarbonate (PC) ou polyéther sulfone (PES), en combinant ce matériau avec la présence d'un additif approprié pour rendre opaque le masque dans son ensemble à l'exception de la zone correspondant à la partie 6 rendue transparente aux rayons 4.

Cet additif peut consister en une fine épaisseur d'un revêtement 7, disposée sur la face arrière 3a du masque, tel qu'illustré sur la figure 2. A titre d'exemple non limitatif, ledit revêtement 7 peut consister en une couche de peinture ou en un matériau métallique déposé en couche mince. Le revêtement peut par exemple être déposé par aluminage.

Le revêtement 7 est plus sombre que le matériau de base du masque et ce revêtement participe ainsi à l'aspect sombre que l'on souhaite donner au masque. Il convient comme cela a été précisé plus haut que ce revêtement ne soit pas présent dans la zone correspondant à la partie 6. L'absence de revêtement 7 peut être obtenue par masquage de ladite partie 6 lors de la dépose dudit revêtement, ou par ablation sélective dudit revêtement sur ladite partie 6 après dépose de celui-ci. Tel qu'illustré sur la figure 2, la fine couche de matériau 7 est absente de la partie 6 du masque sur laquelle sont concentrés les rayons 4 réfléchis et focalisés par la lentille 2. L'aspect visuel "noir diffusant" de l'ensemble du masque est ainsi conservé, mais le masque 3 devient, en sa partie 6, transparent aux rayons 4 qui le traversent alors sans générer d'échauffement excessif. A titre d'exemple, des réductions de plus de 30 degrés Celsius de l'échauffement du masque 3 ont été mesurées par la mise en œuvre de ce mode de réalisation de l'invention.

Selon un mode de réalisation alternatif de l'invention, on peut prévoir d'obtenir la partie transparente 6 avec un masque 3 réalisé par bi-injection. Les deux matériaux différents consistent en un premier matériau transparent qui s'étend sur une partie 6 de faible largeur (de l'ordre du millimètre) dudit masque incluant la zone de concentration 5 des rayons du soleil sur le masque, et en un deuxième matériau, entièrement opaque et de plus bas coût, remplissant les fonctions esthétiques attendues du masque 3. Un tel mode de réalisation, légèrement plus onéreux que le précédent mode de réalisation exposé, permet toutefois d'atteindre, pour un coût qui reste limité, des performances thermiques encore plus élevées, tout en étendant le champ des possibilités esthétiques.

La description qui précède explique clairement comment l'invention permet d'atteindre les objectifs qu'elle s'est fixés et notamment de proposer un ensemble lumineux qui permette de réduire fortement les dégradations résultant de la réflexion et de la focalisation, au sein dudit ensemble, de rayons lumineux issus du soleil. Ces objectifs sont notamment atteints par l'intégration d'une partie transparente à ces rayons dans un masque dont le rendu pour les observateurs extérieurs est opaque, sur une dimension adaptée à laisser passer ces rayons sans qu'il soit notable pour un observateur extérieur qu'une telle partie transparente existe.

Il est toutefois à noter que l'invention ne saurait se limiter aux modes de réalisation décrits dans le présent document, et qu'elle s'étend à tous moyens équivalents et à toute combinaison techniquement opérante de tels moyens. Notamment, dans le cas où le module pour l'éclairage et/ou la signalisation du véhicule comporte une pluralité de sources émettrices de lumière et une pluralité de moyens de focalisation disposés en série pour générer une pluralité de faisceaux lumineux, on pourra prévoir sans sortir du contexte de l'invention que la géométrie de la partie 6 pourra avantageusement être adaptée, notamment en longueur, pour être rendue transparente aux rayons 4 issus du soleil et réfléchis et focalisés par l'ensemble des moyens de focalisation 2 du module, ou bien l'on pourra prévoir de ménager en série dans l'épaisseur du masque 3 plusieurs parties 6, rendues chacune transparentes auxdits rayons 4.

## Revendications

1. Ensemble lumineux pour l'éclairage et/ou la signalisation d'un véhicule automobile, qui comporte un module lumineux logeant au moins des moyens d'émission et des moyens de focalisation (2) d'un ou plusieurs faisceaux lumineux, ainsi qu'un masque (3) dont une portion s'étend au-dessous desdits moyens de focalisation (2), une partie (6) dudit masque (3) étant transparente à la lumière, ladite partie transparente étant disposée sur le masque dans une zone déterminée comme une zone de contact de rayons lumineux (4) issus du soleil et réfléchis et focalisés, sur ladite portion du masque (3), par lesdits moyens de focalisation (2), de sorte que ces rayons lumineux (4) traversent le masque au niveau de ladite partie transparente (6), ledit masque (3) étant réalisé dans un matériau de base, transparent ou translucide, et-**caractérisé en ce que** ledit matériau de base est combiné à un additif permettant de rendre plus sombre ledit masque que dans sa composition d'origine sans additif, l'additif consistant au moins en une fine épaisseur d'un revêtement (7) disposé sur une première face (3a) du masque (3), opposée à une deuxième face (3b) dudit masque (3) exposée auxdits rayons lumineux (4), ladite partie transparente (6) étant formée par le matériau de base du masque et une ouverture formée dans ledit revêtement (7) ou ledit masque (3) est obtenu par injection de deux matériaux polymères de propriétés thermiques différentes, dont l'un forme ladite partie (6) transparente auxdits rayons (4) issus du soleil et réfléchis et focalisés sur ledit masque (3) par lesdits moyens de focalisation (2), et dont l'autre constitue le reste dudit masque (3).

2. Ensemble lumineux selon la revendication 1, **caractérisé en ce que** ladite partie transparente (6) présente une inclinaison par rapport à la normale au plan du masque (3), de manière à être orientée en direction desdits moyens de focalisation (2).

3. Ensemble lumineux selon l'une ou l'autre des revendications 1 ou 2, **caractérisé en ce que** la portion de masque (3) comporte une première face (3a) opposée à une deuxième face (3b) exposée auxdits rayons lumineux (4), ladite partie transparente (6) s'étendant sur toute la hauteur du masque de la première face (3a) jusqu'à la deuxième face (3b).

4. Ensemble lumineux selon l'une quelconque des revendications précédentes, **caractérisé en ce que** le revêtement est ajouré par une ablation au laser pour former ladite ouverture.

5. Ensemble lumineux selon l'une des revendications précédentes, **caractérisé en ce que** la partie transparente (6) présente une forme d'arc de cercle, suivant la courbure d'une lentille formant lesdits moyens de focalisation (2).

## Patentansprüche

1. Lichtanordnung für die Beleuchtung und/oder Signalisierung eines Kraftfahrzeugs, die ein Leuchtmodul, das wenigstens Mittel zur Emission und Mittel zur Fokussierung (2) eines oder mehrerer Lichtbündel, sowie eine Maske (3) aufweist, von der sich ein Teilbereich unter den Fokussierungsmitteln (2) erstreckt, wobei ein Abschnitt (6) der Maske (3) lichttransparent ist,
wobei der transparente Abschnitt auf der Maske in einem Bereich angeordnet ist, der als ein Kontaktbereich für Lichtstrahlen (4) bestimmt ist, die von der Sonne kommen und reflektiert und von den Fokussierungsmitteln (2) auf dem Teilbereich der Maske (3) fokussiert werden, so dass diese Lichtstrahlen (4) am transparenten Abschnitt (6) durch die Maske hindurchgehen, wobei die Maske (3) aus einem transparenten oder durchscheinenden Grundmaterial hergestellt ist, **dadurch gekennzeichnet, dass** das Grundmaterial mit einem Additiv kombiniert ist, das es gestattet, die Maske dunkler als in ihrer ursprünglichen Zusammensetzung ohne Additiv zu machen, wobei das Additiv wenigstens aus einer kleinen Dicke einer Beschichtung (7) besteht, die auf einer ersten Seite (3a) der Maske (3) angeordnet ist, die einer zweiten Seite (3b) der Maske (3) gegenüberliegt, die den Lichtstrahlen (4) ausgesetzt ist, wobei der transparente Abschnitt (6) vom Grundmaterial der Maske und einer Öffnung gebildet ist, die in der Beschichtung (7) gebildet ist, oder die Maske (3) durch Einspritzung zweier Polymermaterialien mit verschiedenen Wärmeeigenschaften erhalten wird, von denen eins den Abschnitt (6) bildet, der für die Strahlen (4) transparent ist, die von der Sonne kommen und reflektiert und von den Fokussierungsmitteln (2) auf der Maske (3) fokussiert werden, und von denen das andere den Rest der Maske (3) bildet.

2. Lichtanordnung nach Anspruch 1, **dadurch gekennzeichnet, dass** der transparente Abschnitt (6) eine Neigung im Verhältnis zur Normalen zur Ebene der Maske (3) aufweist, so dass er in Richtung der Fokussierungsmittel (2) orientiert ist.

3. Lichtanordnung nach einem der Ansprüche 1 oder 2, **dadurch gekennzeichnet, dass** der Teilbereich der Maske (3) eine erste Seite (3a) aufweist, die einer zweiten Seite (3b) gegenüberliegt, die den Lichtstrahlen (4) ausgesetzt ist, wobei sich der transparente Abschnitt (6) über die gesamte Höhe der Maske der ersten Seite (3a) bis zur zweiten Seite (3b) erstreckt.

4. Lichtanordnung nach einem der vorhergehenden Ansprüche, **dadurch gekennzeichnet, dass** die Beschichtung durch eine Laserabtragung durchbrochen ist, um die Öffnung zu bilden.

5. Lichtanordnung nach einem der vorhergehenden Ansprüche, **dadurch gekennzeichnet, dass** der transparente Abschnitt (6) eine Kreisbogenform aufweist, die der Krümmung einer Linse folgt, die die Fokussierungsmittel (2) bildet.

## Claims

1. Lighting assembly for lighting and/or signalling in a motor vehicle, which includes a lighting module accommodating at least means for emitting and means (2) for focusing one or more light beams, together with a mask (3) a portion of which extends under said focusing means (2), a part (6) of said mask (3) being transparent to light, said transparent part being disposed on the mask in an area determined as being an area of contact of solar light rays (4) reflected and focused onto said portion of the mask (3) by said focusing means (2) so that these light rays (4) pass through the mask at the level of said transparent part (6), said mask (3) being produced in a transparent or translucent base material, **characterized in that** said base material is combined with an additive making it possible to render said mask darker than in its original composition with no additive, the additive consisting at least in a thin thickness of a coating (7) disposed on a first face (3a) of the mask (3), which face is opposite a second face (3b) of said mask (3) that is exposed to said light rays (4), said transparent part (6) being formed by the base material of the mask and an opening formed in said coating (7) or said mask (3) is obtained by injection moulding two polymer materials with different thermal properties, one of which forms said part (6) transparent to said solar rays (4) reflected and focused onto said mask (3) by said focusing means (2) and the other of which constitutes the rest of said mask (3).

2. Lighting assembly according to Claim 1, **characterized in that** said transparent part (6) is inclined relative to the normal to the plane of the mask (3) so as to be oriented in the direction of said focusing means (2).

3. Lighting assembly according to either one of Claims 1 and 2, **characterized in that** the portion of the mask (3) includes a first face (3a) that is opposite a second face (3b) exposed to said light rays (4), said transparent part (6) extending over all the height of the mask from the first face (3a) to the second face (3b).

4. Lighting assembly according to any one of the preceding claims, **characterized in that** the coating is perforated by laser ablation so as to form said opening.

5. Lighting assembly according to one of the preceding claims, **characterized in that** the transparent part (6) has a circular arc shape following the curvature of a lens forming said focusing means (2).
